# EUROPEAN PATENT SPECIFICATION

(11) **EP 3 891 104 B1**
(45) Date of publication and mention of the grant of the patent: **01.11.2023**
(21) Application number: 19821261.5
(22) Date of filing: 02.12.2019
(51) Int. Cl.: C02F 9/00, C02F 1/24, C02F 1/38, C02F 1/44, C02F 1/52, C02F 3/28, C02F 11/121, C02F 101/10, C02F 101/16, C02F 101/38, C02F 103/20

(54) **PROCESS AND APPARATUS FOR TREATING MANURE SLUDGE**
VERFAHREN UND VORRICHTUNG ZUR BEHANDLUNG VON DÜNGESCHLAMM
PROCÉDÉ ET DISPOSITIF DE TRAITEMENT DE BOUES DE FUMIER

(30) Priority: 03.12.2018 FI 20186034
(43) Date of publication of application: 13.10.2021
(73) Proprietor: Valio Ltd, 00370 Helsinki (FI)
(72) Inventor: PARTONEN, Antti-Pekka, 00370 Helsinki (FI); HEINO, Antti, 00370 Helsinki (FI); KALLIOINEN, Harri, 00370 Helsinki (FI); HARJU, Matti, 00370 Helsinki (FI)
(74) Representative: Kolster Oy Ab
(86) International application number: PCT/FI2019/050861
(87) International publication number: WO 2020/115361

(56) References cited:
- WO-A1-2018/046799
- GIENAU T ET AL: "Nutrient recovery from anaerobic sludge by membrane filtration: pilot tests at a 2.5 MW biogas plant", INTERNATIONAL JOURNAL OF RECYCLING OF ORGANIC WASTE IN AGRICULTURE, BIOMED CENTRAL LTD, LONDON, UK, vol. 7, no. 4, 5 September 2018 (2018-09-05), pages 325-334, XP021262209, ISSN: 2195-3228, DOI: 10.1007/S40093-018-0218-6

## Description

### FIELD OF THE INVENTION

The present invention relates to agricultural and separation technologies. More particularly, the invention relates to treatment of manure sludge by means of separation technologies.

### BACKGROUND OF THE INVENTION

Manure sludge from dairy and piggery is widely spread to the fields as a fertilizer. However, there are factors which restrict the efficient use of the sludge as a fertilizer. For example, the dry matter content is low, typically less than 10 wt%, which prevents its transportation to longer distances. Moreover, the sludge contains both nitrogen and phosphate, which makes its use complicated because of the environmental regulations. In many cases only nitrogen is needed, and the phosphate content of the sludge prevents its wider use. In some cases, the nitrogen content of the sludge prevents its use as a phosphate fertilizer. Another problem of manure sludge is that a portion of nitrogen is lost as ammonia to the atmosphere and about half of the nitrogen amount is so tightly bound to fiber that it is not readily useful for the plants.

WO 2018/046799 A1 discloses a process and an apparatus for treating manure sludge comprising the successive steps of separation, centrifugation and reverse osmosis filtration, whereby the major part of phosphorus and about half of nitrogen present in the sludge are recovered in the dry fractions obtained by the process. The other half of nitrogen and a minor portion of phosphorus are recovered in the liquid fractions.

It is known that manure sludge can be anaerobically digested to produce energy through biogas production.

It is also known that in waste water treatment plants, ferric sulphate and some other ferrous and aluminum salts are used to precipitate phosphorus. In aerobic waste water plants, also flocculation polymers are often added to the water to improve the separation of sludge in a decanter centrifuge.

There is still a need for more improved separation of phosphorus and nitrogen from the manure sludge, on one hand, and from each other into different fractions, on the other hand.

We have now found an enhanced process for treating manure sludge wherein phosphorus and nitrogen are efficiently separated from each other into different fractions, whereby said fractions can be appropriately used as phosphorus and nitrogen fertilizers, respectively. At the same time, energy is produced from the sludge.

### BRIEF DESCRIPTION OF THE INVENTION

An object of the present invention is to provide a method for treating manure sludge comprising the steps of:
- providing manure sludge,
- subjecting the manure sludge to separation to provide a first dry fraction and a first liquid fraction,
- adding a metal salt to the first liquid fraction to provide a metal salt-containing first liquid fraction,
- subjecting the metal salt-containing first liquid fraction to a first centrifugation to provide a second dry fraction and a second liquid fraction,
- leading the first dry fraction and the second dry fraction to an anaerobic digestion reactor to provide a digestate and biogas,
- subjecting the digestate to a second centrifugation to provide a third liquid fraction and a third dry fraction,
- recovering the third dry fraction,
- subjecting the second liquid fraction and the third liquid fraction to clarification selected from at least one of ultrafiltration and flotation to provide a clarified liquid fraction,
- subjecting the clarified liquid fraction to one or more reverse osmosis (RO) filtration steps to provide an RO retentate and an RO permeate,
- recovering the RO retentate.

The invention further provides a method in which phosphorus and nitrogen present in manure sludge are efficiently separated into different fractions. It was surprisingly found that anaerobic digestion of a dry material removed from the manure sludge by the method of the invention efficiently converts up to 50% of nitrogen bound in the sludge to a soluble form. Thus, by carrying out the method, phosphorus is mainly recovered in the dry fractions obtained in the method while a significant portion of nitrogen present in the sludge is converted and recovered as a more soluble form in the liquid fraction. This provides an efficient use of both phosphorus and nitrogen as fertilizers in an appropriate manner.

The invention also provides a method which produces a high amount of a water fraction with ultimately low chemical oxygen demand (COD) and low nitrogen and phosphorus contents.

The invention still further provides a method which produces a liquid fraction which contains a high amount of soluble nitrogen but is substantially free of phosphorus.

Another object of the invention is to provide an apparatus for treating manure sludge comprising the means for implementing the method of the present invention, as defined in claim 12.

In an aspect, the invention provides use of the apparatus of invention in the method of the invention.

### BRIEF DESCRIPTION OF THE DRAWINGS

Figure 1 shows an embodiment of the method of the invention;
Figure 2 shows an embodiment of the apparatus of the invention.

### DETAILED DESCRIPTION OF THE INVENTION

An object of the present invention is to provide a method for treating manure sludge comprising the steps of:
- providing manure sludge,
- subjecting the manure sludge to separation to provide a first dry fraction and a first liquid fraction,
- adding a metal salt to the first liquid fraction to provide a metal salt-containing first liquid fraction,
- subjecting the metal salt-containing first liquid fraction to a first centrifugation to provide a second dry fraction and a second liquid fraction,
- leading the first dry fraction and the second dry fraction to an anaerobic digestion reactor to provide a digestate and biogas,
- subjecting the digestate to a second centrifugation to provide a third liquid fraction and a third dry fraction,
- recovering the third dry fraction,
- subjecting the second liquid fraction and the third liquid fraction to clarification selected from at least one of ultrafiltration and flotation to provide a clarified liquid fraction,
- subjecting the clarified liquid fraction to one or more reverse osmosis (RO) filtration steps to provide an RO retentate and an RO permeate,
- recovering the RO retentate.

The manure sludge used in the method of the invention can be derived from any animal. Typically, manure sludge is derived from cattle or pigs.

In the method of the invention, the manure sludge is typically treated at its natural temperature. The temperature is typically between 2°C and 20°C. If appropriate, the method can comprise a heating step or a cooling step at any stage during the method in order to enhance the separation of the nutrients.

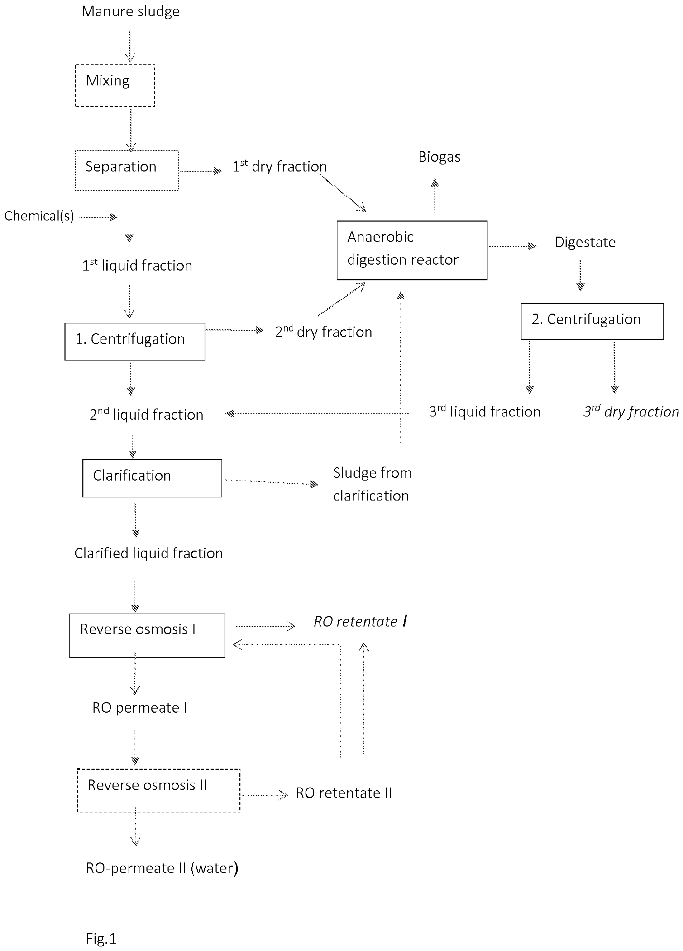

Figure 1 illustrates an embodiment of the method of the invention. The dashed lines indicate optional embodiments of the invention. The fractions typed in italic letters represent final products which can be used as a ready-to-use nutrient-containing preparations as fertilizers, for example.

The dry matter content of manure sludge to be treated is typically in the range of about 1 wt% to about 15 wt%. The chemical oxygen demand of manure sludge is typically >15000 mg Oz/L. Nitrogen, phosphorus and potassium in the manure sludge are typically present in the ratio of N:P:K of 3-10:1:3-10.

In the method, the manure sludge is subjected to a separation step to remove the coarsest solids from the sludge. Any device which provides separation of solid matter from liquid can be used. For example, the separation can be carried out by filtering, centrifugation, sieving optionally using pressure, or with mechanical separators, including drum filter, screw press or disc filter. The separation can also be carried out by pressing the manure through gauze. In an embodiment, the separation is carried out with a screw press. The separation provides about 15 wt% to about 35 wt% of a first dry fraction and about 65 wt% to about 85 wt% of a first liquid fraction based on the weight of the manure sludge feed. The dry matter content of the first dry fraction is about 15 wt% to about 35 wt%. In an embodiment, the dry matter content of the first dry fraction is about 30 wt%.

The dry matter content of the first liquid fraction is about 1.5 wt% to about 5 wt%.

The separation step can be enhanced by washing whereby the transfer of soluble dry matter minerals and/or nutrients to the liquid fraction is increased. Washing can be carried out by using one or more liquid fractions which are obtained in subsequent steps of the method of the invention.

In addition to washing or alternatively, additives can be added in the separation step to enhance the separation of solid matter, minerals and/or nutrients.

Prior to the separation step, manure sludge can be mixed to provide mixed manure sludge. Mixing of the manure sludge provides more stable operating conditions during the process. Any mixing device is suitable which produces a fairly homogenous mass of manure sludge, which is further led to the separation step.

The liquid fraction derived from the separation, i.e. the first liquid fraction, is led to a first centrifugation to dewater the liquid fraction. Centrifugation means herein a process using a device, that is to say a centrifuge, which employs a high rotational speed to separate components of different densities. In an embodiment, the drum speed of the centrifuge is in the range of 2000 to 5000 rpm. In another embodiment, the differential speed of the centrifuge is in the range of 0 to 20 rpm. In an embodiment, the first centrifugation is carried out with a decanter centrifuge.

Prior to the first centrifugation a metal salt is added to the first liquid fraction to enhance the dewatering capacity of the centrifuge through enhancing the solid phase formation in the first liquid fraction, and to enhance the separation and precipitation of phosphorus from the liquid fraction. Part of the phosphorus in the manure sludge is poorly soluble in water and is already bound to the solid matter of the sludge. Therefore, a part of the phosphorus follows the dry factions to the digestion reactor. However, a part of phosphorus is dissolved in the liquid phase of the sludge. Prior to the first centrifugation step the added metal salt precipitates the dissolved phosphorus and the phosphorus deposit ends up into the second dry fraction and thereafter into the anaerobic digestion reactor.

In an embodiment, the metal salt is an inorganic salt of a trivalent metal. In another embodiment, the metal salt is an inorganic salt of a trivalent metal, such as iron, aluminium or chromium. In a further embodiment, the metal salt is ferric sulphate. Mixtures of said metal salts can also be used.

In an embodiment, the inorganic salt enhancing the formation of the second dry fraction from the first liquid fraction is ferric chloride or ferric sulphate or a mixture thereof. Ferric chloride and/or ferric sulphate is especially suitable for precipitating phosphorus.

In an embodiment, metal salt(s) is added in the amount of 0.01 to 5.0 kg/kg total solids of the first liquid fraction. In an embodiment, metal salt(s) is added in the amount of 5.0 kg/ton of the first liquid fraction. In an embodiment, the amount of ferric sulphate is about 5.0 kg/ton of the first liquid fraction.

In an embodiment, a flocculation agent is added to the first liquid fraction prior to the first centrifugation. The flocculation agent is typically a cationic, anionic or nonionic polymer. According to an embodiment of the invention, the polymer flocculant is a highly cationic long chain highly branched polymer. In an embodiment, the flocculation agent is added in the amount of 0.01 to 5.0 kg/kg total solids of the first liquid fraction. In another embodiment, the amount of the flocculation agent is about 0.5 kg/ton of the first liquid fraction.

In an embodiment, both a trivalent metal salt and a polymer flocculant is added to the first liquid fraction.

Dynamic or static mixers can be used to enhance the mixing of the liquid fraction and the chemical(s).

The centrifugation of the first liquid fraction, i.e. the first centrifugation, provides about 10 wt% to about 20 wt% of a second dry fraction and about 80 wt% to about 90 wt% of a second liquid fraction based on the feed subjected to the first centrifugation. The amount of the second dry fraction from centrifugation corresponds to about 5 wt% to about 15 wt% based on the total amount of the starting manure sludge.

The dry matter content of the second dry fraction and that of the second liquid fraction obtained from the first centrifugation is about 15 wt% to about 25 wt%, and about 0.1 wt% to about 2.0 wt%, respectively. In an embodiment, the dry matter content of the second dry fraction is about 20 wt%.

The first dry fraction and the second dry fraction obtained from the separation and the first centrifugation, respectively, are transferred to an anaerobic digestion reactor. In an embodiment, the first dry fraction forms about 75% and the second dry fraction about 25% of the feed to the digestion. In an embodiment, the dry matter content of the first dry fraction and the second dry fraction is about 15 wt% to about 35 wt% and 15 wt% to about 25 wt%, respectively. In another embodiment, the dry matter content of the first dry fraction and the second dry fraction is about 30 wt% and about 20 wt%, respectively. In an embodiment, the dry matter content of the combined first dry fraction and the second dry fraction is in the range of about 15 wt% to about 35 wt%. In another embodiment, the dry matter content of the combined first dry fraction and the second dry fraction is about 28 wt%. Anaerobic digestion of said dry material produces biogas and provides a liquid residue, i.e. a digestate. The anaerobic digestion efficiently converts nitrogen present in the combined dry fractions to soluble nitrogen which is finally recovered in the reverse osmosis retentate obtained in the method.

The temperature of the anaerobic digestion reactor is adjusted to a level which is suitable for mesophilic or thermophilic microbes. For mesophilic microbes, the temperature is typically between 33°C and 35°C. For thermophilic microbes, the temperature is typically from 55°C to 60°C, or more.

About 1 wt% of the manure sludge feed is converted to biogas.

The digestate from the anaerobic digestion reactor is subjected to a centrifugation, "a second centrifugation", to provide a third liquid fraction and a third dry fraction. The second centrifugation can be carried with the same device and in the same conditions as the first centrifugation described above. In an embodiment, the drum speed of the second centrifuge is in the range of 2000 to 5000 rpm. In another embodiment, the differential speed of the second centrifuge is in the range of 0 to 20 rpm. In an embodiment, the second centrifugation is carried out with a decanter centrifuge.

The dry matter content of the third dry fraction is about 25 wt% to about 35 wt%. The N:P:K ratio of the third dry fraction is in the range of 1-3:1:1-2. The second centrifugation provides a dry fraction which has a high content of phosphorus but a low content of soluble nitrogen. The third dry fraction is thus well suitable for use as a phosphorus rich fertilizer, for example in farming. It can be spread on fields and onto the soil. Typically, phosphorus fertilizer is spread on the fields once in a three-years period, especially before the growing season.

The third dry fraction is also a suitable starting material for pelletized fertilizer products.

The third liquid fraction is recycled to the second liquid fraction.

The second and the third liquid fractions obtained from the centrifugations are further subjected to a clarification step to further clarify the liquid fractions. In an embodiment, the clarification step is selected from ultrafiltration and/or flotation. The clarification step provides a solid fraction and a clarified liquid fraction. The solid fraction is typically sludge with increased solid content compared to the feed into the clarification unit. The solid fraction from the clarification step can be subjected to anaerobic digestion and directed to the anaerobic digestion reactor at the plant.

In an embodiment, the flotation is a dissolved-air-flotation type. The dissolved-air-flotation is carried out in a conventionally manner known to a skilled person. The ultrafiltration and/or the flotation still decrease the dry matter content of the combined second and third liquid fractions. In an embodiment, the clarification is carried out by ultrafiltration. The pore size of the ultrafiltration membrane is typically in the range of 0.02 to 0.1 µm. In an embodiment, the pore size is 0.08 µm.

The clarified liquid fraction is then subjected to one or more sequential reverse osmosis (RO) filtrations to still remove dry matter from the liquid fraction and to lower the COD value thereof. When a plurality of RO filtration steps is carried out, in each filtration step the feed is the permeate fraction obtained from the previous RO filtration step. In an embodiment, the method of invention involves two RO filtration steps.

In the reverse osmosis filtration, the clarified liquid fraction is concentrated while water is removed. Reverse osmosis provides a retentate, that is a concentrate, which is a fraction retained above the membrane, and a permeate which is a fraction passed through the membrane. Soluble nitrogen is appropriately recovered in the RO retentate. The RO retentate rich in soluble nitrogen is thus well suitable as a liquid nitrogen fertilizer.

The RO retentate produced in accordance with the method of the invention is preferably spread on the field after harvesting. The RO retentate is also a suitable starting material for ammonium stripping, where nitrogen precipitates as ammonium sulphate. The RO retentate is also suitable for evaporation to concentrate nitrogen content in the retentate.

When the RO permeate is further re-concentrated by a second RO filtration, a second RO permeate fraction is obtained which is substantially free of dry matter and nutrients and is mainly pure water. The permeate fraction can thus be led to the nature or used as a flushing water as well as animal drinking water.

In the first RO filtration step, a volume concentration factor (VCF) of 5 to 15 is used. The volume concentration factor is the ratio of the initial solution volume to the final solution volume. In an embodiment, the VCF is 10. In the subsequent RO filtration steps, VCF of 10 to 80 is used. In an embodiment, the VCF is 50 in said further RO filtration steps.

In an embodiment, the liquid fraction obtained from the clarification is subjected as a feed to two successive RO filtration steps wherein the permeate obtained from the first RO filtration is subjected to a second RO filtration. The retentate from the second and subsequent RO filtration steps are either fed to the first RO filtration step together with the liquid fraction feed, or mixed with the retentate obtained in the first RO filtration step. The dry matter content of the retentate obtained after the first RO filtration steps, optionally including one or more retentates derived from the subsequent RO filtration steps, is about 1 wt% to about 15 wt%. The N:P:K ratio of the retentate obtained after the first RO filtration step, optionally including one or more retentates derived from the subsequent RO filtration steps, is in the range of 5000 - 10000 : 1 : 10000 - 20000.

The dry matter content of the permeate after one or more RO filtration steps is <0.5 wt%. The permeate is mainly water. The COD of this permeate is ≤15 mg Oz/L. The initial feed for the RO step, that is the liquid fraction from the clarification, is divided in the one or more RO filtration steps so that about 10 wt% of retentate and about 90 wt% of permeate are formed from the clarified liquid fraction.

The method of the invention described above, including one or more successive RO filtration steps, reduces the total amount of the nutrient rich fraction down to about 30 wt% from the original amount while up to about 70 wt% is processed into pure water. For example, when 10 000 kg of manure sludge is processed, 3 100 kg of dry manure (31 wt%) from the separation and centrifugation steps together, 700 kg of liquid fertilizer (7 wt%) obtained as a retentate from reverse osmosis and 6 200 kg of pure water (62 wt%) obtained as a permeate after two reverse osmosis steps are produced. This outcome is however indicative and can vary depending on the composition of the manure sludge and the pursued compositions of the various fractions obtained in the method. Furthermore, the use of dewatering chemicals, i.e. metal salts described above, has an effect on the overall result achieved by the method.

Typical percentages by weight of the various fractions obtained from manure sludge by the method of the invention are described in Table 1 below. The proportions of the various fractions and dry matter contents thereof vary with the composition of the manure sludge. "1^{st} dry fraction" means the dry fraction derived from the separation step. "2^{nd} dry fraction" means the dry fraction derived from the first centrifugation step. "3^{rd} dry fraction" means the dry fraction derived from the second centrifugation step. "RO retentate I" means the RO retentate derived from the first reverse osmosis filtration step.

**Table 1**

| | Manure sludge | 1^{st} dry fraction | 2^{nd} dry fraction | 3^{rd} dry fraction | RO retentate I |
|---|---|---|---|---|---|
| Proportion (%) | 100 | 15-35 | 5-15 | 10-20 | 10-20 |
| Dry matter (%) | 1-15 | 15-35 | 15-25 | 15-40 | 5-10 |
| N:P:K ratio | 3-10:1:3-10 | n.d. | n.d. | 1-3:1:1-2 | 5000-10000:1:10000 -20000 |

| | | | | | |
|---|---|---|---|---|---|
| n.d. = not determined | | | | | |

Table 1 shows that phosphorus is extensively recovered in the 3^{rd} dry fraction while nitrogen is extensively recovered in the RO retentate.

When the manure sludge is treated by the method of the invention, at least 75 wt% of the total amount of nitrogen present in the manure sludge is recovered as soluble nitrogen in the RO retentate. Further, at least 99 wt% of the total amount of phosphorus present in the manure sludge is recovered in the 3^{rd} dry fraction.

The method of the invention can be a continuous process or a batch process.

Also disclosed but not claimed is an apparatus for treating manure sludge comprising:
- a separator unit for separating manure sludge to a first dry fraction and a first liquid fraction,
- a first centrifuge for separating the metal salt-containing first liquid fraction to provide a second dry fraction and a second liquid fraction,
- an anaerobic digestion reactor to provide a digestate and biogas from the combined first dry fraction and the second dry fraction,
- a second centrifuge for separating the digestate to provide a third liquid fraction and a third dry fraction,
- a clarification unit for clarifying the second liquid fraction and the third liquid fraction,
- one or more reverse osmosis filtration units for concentrating the clarified liquid fraction to provide an RO retentate and an RO permeate.

In an embodiment, the clarification unit comprises an ultrafiltration unit and/or a flotation unit. In an embodiment, the flotation unit is a dissolved-air-flotation unit.

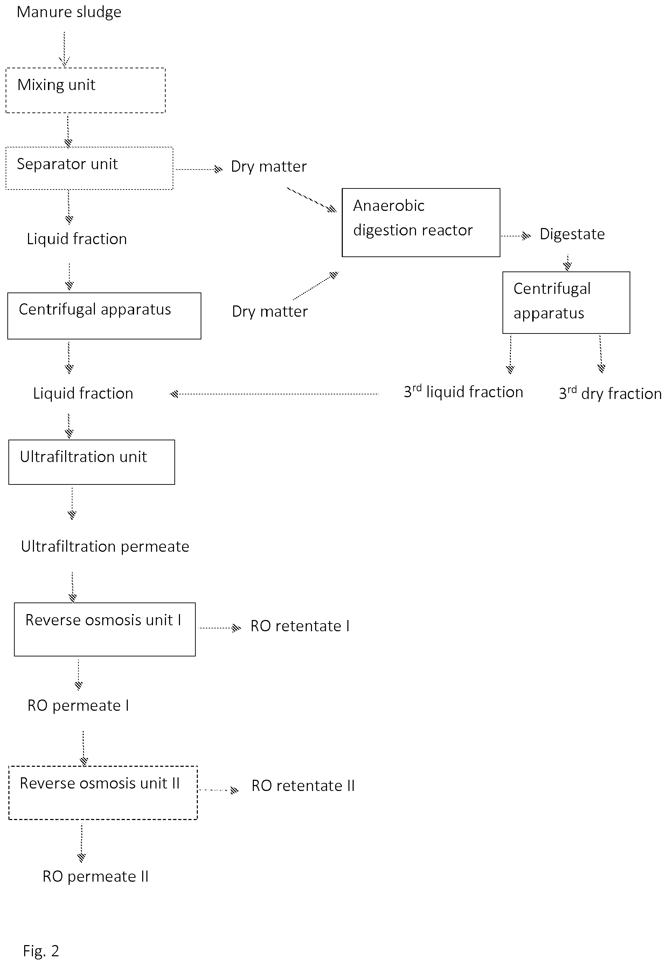

An embodiment of the apparatus of the invention is illustrated in Fig. 2. The dashed lines indicate optional embodiments of the invention. In Figure 2, the clarification unit is an ultrafiltration unit. In an embodiment, the apparatus includes two reverse osmosis units.

In an embodiment, the apparatus comprises a mixing unit upstream from the separator unit to provide fairly homogenous manure sludge.

In an aspect, the invention provides use of the apparatus of invention in the method of the invention.

The following example is presented for further illustration of the invention without limiting the invention thereto.

### EXAMPLE

1000 m³ of liquid cow manure sludge having a dry matter (DM) content of 8 wt% was processed by a screw press (EYS SP600, mesh size: 0.5 mm) which resulted in two fractions: 250 metric tons of a dry fraction ("1^{st} dry fraction"; DM 21 wt%) and 750 m³ of a liquid fraction (DM 3 wt%).

The liquid fraction was pumped to a decanter centrifuge (Andritz Separation, model D5L, drum speed: 3200 rpm, differential speed: 3.9 rpm, torque: 55 wt%, pond depth: 272 mm) which further removed suspended solids. Before subjecting the liquid fraction to the centrifuge, iron(III) sulphate, Fe₂(SO₄)₃ (PIX-105; Kemira Ltd), and a flocculating agent (Zetag^{®}, BASF) were added to the liquid fraction to improve the separation of the dry matter of the liquid fraction. The added amount of Fe₂(SO₄)₃ was 5 kg/ton of the liquid fraction. The added amount of the flocculating agent was 0.5 kg/ ton of the liquid fraction.

Centrifugation by the decanter centrifuge resulted in two fractions: a liquid fraction ("2^{nd} liquid fraction") and a dry fraction ("2^{nd} dry fraction"). After centrifugation, the dry matter contents of the liquid fraction and the dry fraction were less than 1 wt% and 18 wt%, respectively.

The dry fraction from the separation ("1^{st} dry fraction") and the dry fraction from the centrifugation ("2^{nd} dry fraction") are combined and subjected to an anaerobic digestion reactor adjusted to 55°C. The digestion of the dry fraction gave biogas and a digestate (a liquid fraction) which was subjected to centrifugation. The centrifugation was carried out with the decanter centrifuge described above. The centrifugation gave two fractions, i.e. a liquid fraction and a dry fraction ("3^{rd} dry fraction").

The 3^{rd} liquid fraction was recycled to the 2^{nd} liquid fraction.

The combined 2^{nd} liquid fraction and the 3^{rd} liquid fraction was further clarified with an ultrafiltration (UF) plant to provide an ultrafiltration permeate. The ultrafiltration permeate was pumped to a reverse osmosis (RO) plant (DOW Filmtec SW30 membranes). In the RO, a volume concentration factor of 10 was used which produced 76 m³ of retentate ("RO retentate") and 684 m³ of permeate. DM contents of these fractions were 10 wt% and less than 0.1 wt%, respectively.

To further purify the RO permeate, it was re-filtrated in the RO plant (DOW Filmtec SW30 membranes) with a volume concentration factor of 50 which resulted again in two fractions: 14 m³ of retentate and 670 m³ of permeate ("Pure water"). DM content of the retentate was 5 wt%. The chemical oxygen demand (COD) of the permeate was only 15 mg Oz/L.

The compositions of the fractions obtained above are shown in Table 2. Percentage values are given on weight basis and calculated from total input amount.

**Table 2**

| | Manure sludge | 1^{st} dry fraction | 2^{nd} dry fraction | 3^{rd} dry fraction (phosphorus fertilizer) | RO retentate (nitrogen fertilizer) | Pure water |
|---|---|---|---|---|---|---|
| Proportion (wt%) | 100 | 12 | 6 | 20 | 13.5 | 65.5 |
| Dry matter (wt%) | 8 | 21 | 19 | 28 | 5 | 0 |
| Total phosphorus (mg/kg) | 450 | 900 | 2500 | 1500 | 2 | 0 |
| Total nitrogen (mg/kg) | 2700 | 3400 | 8500 | 2800 | 15000 | 5 |
| Soluble nitrogen of Nₜₒₜ (%) | 25 | 50 | 50 | 25 | 80 | 100 |
| Total potassium (mg/kg) | 2600 | 2400 | 1800 | 2200 | 20000 | 4 |
| COD (mg O₂/L) | >20 000 | - | - | - | - | 15 |

The results given in Table 2 show that significant portions of nitrogen and phosphorus are recovered from the manure sludge in different fractions, that is in the reverse osmosis retentate and the 3^{rd} dry fraction, respectively. Table 2 also shows that a significant portion of the nitrogen is recovered as soluble nitrogen providing an efficient use of nitrogen as a fertilizer.

Table 2 also shows that a significant portion of phosphorus is recovered from the manure sludge in the 3^{rd} dry fraction.

The mass balance of the process is presented in Table 3.

**Table 3**

| | Manure sludge | Phosphorus fertilizer | Nitrogen fertilizer | Pure water | To biogas |
|---|---|---|---|---|---|
| Total weight (%) | 100 | 20.0 | 13.5 | 65.5 | 1.0 |
| Dry matter (%) | 100 | 75.0 | 9.0 | 0 | 16.0 |
| Phosphorus (%) | 100 | 100 | 0 | 0 | 0 |
| Nitrogen (%) | 100 | 25.0 | 75.0 | 0 | 0 |
| Potassium (%) | 100 | 8.0 | 92.0 | 0 | 0 |

It will be obvious to a person skilled in the art that, as the technology advances, the inventive concept can be implemented in various ways. The invention and its embodiments are not limited to the examples described above but may vary within the scope of the claims.

## Claims

1. A method for treating manure sludge comprising the steps of:
- providing manure sludge,
- subjecting the manure sludge to separation to provide a first dry fraction and a first liquid fraction,
- adding a metal salt to the first liquid fraction to provide a metal salt-containing first liquid fraction,
- subjecting the metal salt-containing first liquid fraction to a first centrifugation to provide a second dry fraction and a second liquid fraction,
- leading the first dry fraction and the second dry fraction to an anaerobic digestion reactor to provide a digestate and biogas,
- subjecting the digestate to a second centrifugation to provide a third liquid fraction and a third dry fraction,
- recovering the third dry fraction,
- subjecting the second liquid fraction and the third liquid fraction to clarification selected from at least one of ultrafiltration and flotation to provide a clarified liquid fraction,
- subjecting the clarified liquid fraction to one or more reverse osmosis (RO) filtration steps to provide an RO retentate and an RO permeate,
- recovering the RO retentate.

2. The method of claim 1, wherein the first dry fraction forms about 75% and the second dry fraction about 25% of the feed to the digestion.

3. The method of claim 1 or 2, wherein the dry matter content of the combined first dry fraction and the second dry fraction is in the range of about 15 wt% to about 35 wt%, specifically about 28 wt%.

4. The method of any one of the preceding claims, wherein the metal salt is added in the amount of 0.01 to 5.0 kg/kg total solids of the first liquid fraction, specifically in the amount of about 5.0 kg/ton of the first liquid fraction.

5. The method of any one of the preceding claims, wherein the metal salt is an inorganic salt of a trivalent metal, such as iron, aluminium or chromium.

6. The method of claim 5, wherein the metal salt is ferric sulphate or ferric chloride or a mixture thereof.

7. The method of any one of the preceding claims, wherein a flocculating agent is added to the metal salt-containing first liquid fraction.

8. The method of any one of the preceding claims, wherein the dry matter content of the third dry fraction is in the range of about 25 wt% to about 35 wt%.

9. The method of any one of the preceding claims, wherein the dry matter content of the RO retentate is in the range of about 1 wt% to about 15 wt%.

10. The method of any one of the preceding claims, wherein the RO permeate is subjected to a second RO filtration step to provide a second RO permeate.

11. The method of claim 10, wherein the chemical oxygen demand (COD) of the second RO permeate is ≤15 mg O₂/L.

12. Apparatus for treating manure sludge comprising means for implementing the method of any one of claims 1-11, wherein the means comprise:
- a separator unit for separating manure sludge to a first dry fraction and a first liquid fraction,
- a first centrifuge configured to receive a metal salt-containing first liquid fraction to provide a second dry fraction and a second liquid fraction,
- an anaerobic digestion reactor configured to receive the first dry fraction and the second dry fraction and to provide a digestate and biogas from the combined first dry fraction and the second dry fraction,
- a second centrifuge configured to receive the digestate and to provide a third liquid fraction and a third dry fraction,
- a clarification unit configured to receive the second liquid fraction and the third liquid fraction and to provide a clarified liquid fraction,
- one or more reverse osmosis filtration units configured to receive the clarified liquid fraction to provide an RO retentate and an RO permeate.

13. The apparatus of claim 12, wherein the clarification unit is selected from at least one of the ultrafiltration unit and the flotation unit.

14. The apparatus of claim 12 or 13, wherein two reverse osmosis units are present.

15. Use of the apparatus of any one of claims 12 to 14 in the method for treating manure sludge of any one of claims 1 to 11.

## Patentansprüche

1. Verfahren zur Behandlung von Gülleschlamm, umfassend die Schritte:
- Bereitstellen von Gülleschlamm,
- Unterziehen des Gülleschlamms einer Abscheidung, um eine erste trockene Fraktion und eine erste flüssige Fraktion bereitzustellen,
- Zugeben eines Metallsalzes zu der ersten flüssigen Fraktion, um eine metallsalzhaltige erste flüssige Fraktion bereitzustellen,
- Unterziehen der metallsalzhaltigen ersten flüssigen Fraktion einer ersten Zentrifugation, um eine zweite trockene Fraktion und eine zweite flüssige Fraktion bereitzustellen,
- Leiten der ersten trockenen Fraktion und der zweiten trockenen Fraktion in einen anaeroben Gärungsreaktor, um einen Gärrest und Biogas bereitzustellen,
- Unterziehen des Gärrests einer zweiten Zentrifugation, um eine dritte flüssige Fraktion und eine dritte trockene Fraktion bereitzustellen,
- Gewinnen der dritten trockenen Fraktion,
- Unterziehen der zweiten flüssigen Fraktion und der dritten flüssigen Fraktion einer Klärung, die aus mindestens einer von Ultrafiltration und Schwimmaufbereitung ausgewählt ist, um eine geklärte flüssige Fraktion bereitzustellen,
- Unterziehen der geklärten flüssigen Fraktion einem oder mehreren Umkehrosmose-Filtrationsschritten (UO-Filtrationsschritten), um ein UO-Retentat und ein UO-Permeat bereitzustellen,
- Gewinnen des UO-Retentats.

2. Verfahren nach Anspruch 1, wobei die erste trockene Fraktion etwa 75 % und die zweite trockene Fraktion etwa 25 % der Beschickung zu der Gärung bilden.

3. Verfahren nach Anspruch 1 oder 2, wobei der Trockensubstanzgehalt der kombinierten ersten trockenen Fraktion und der zweiten trockenen Fraktion im Bereich von etwa 15 Gew.-% bis etwa 35 Gew.-% liegt, spezifisch etwa 28 Gew.-% beträgt.

4. Verfahren nach einem der vorhergehenden Ansprüche, wobei das Metallsalz in der Menge von 0,01 bis 5,0 kg/kg Gesamtfeststoffe der ersten flüssigen Fraktion, spezifisch in der Menge von etwa 5,0 kg/Tonne der ersten flüssigen Fraktion zugegeben wird.

5. Verfahren nach einem der vorhergehenden Ansprüche, wobei das Metallsalz ein anorganisches Salz eines dreiwertigen Metalls ist, wie Eisen, Aluminium oder Chrom.

6. Verfahren nach Anspruch 5, wobei das Metallsalz Eisen(III)-sulfat oder Eisen(III)-chlorid oder ein Gemisch davon ist.

7. Verfahren nach einem der vorhergehenden Ansprüche, wobei ein Flockungsmittel der metallsalzhaltigen ersten flüssigen Fraktion zugegeben wird.

8. Verfahren nach einem der vorhergehenden Ansprüche, wobei der Trockensubstanzgehalt der dritten trockenen Fraktion im Bereich von etwa 25 Gew.-% bis etwa 35 Gew.-% liegt.

9. Verfahren nach einem der vorhergehenden Ansprüche, wobei der Trockensubstanzgehalt des UO-Retentats im Bereich von etwa 1 Gew.-% bis etwa 15 Gew.-% liegt.

10. Verfahren nach einem der vorhergehenden Ansprüche, wobei das UO-Permeat einem zweiten UO-Filtrationsschritt unterzogen wird, um ein zweites UO-Permeat bereitzustellen.

11. Verfahren nach einem der vorhergehenden Ansprüche, wobei der chemische Sauerstoffbedarf (CSB) des zweiten UO-Permeats ≤ 15 mg O₂/L beträgt.

12. Vorrichtung zur Behandlung von Gülleschlamm, umfassend Mittel zum Implementieren des Verfahrens nach einem der Ansprüche 1-11, wobei die Mittel umfassen:
- eine Abscheider-Einheit zum Abscheiden von Gülleschlamm zu einer trockenen Fraktion und einer ersten flüssigen Fraktion,
- eine erste Zentrifuge, die dazu konfiguriert ist, eine metallsalzhaltige erste flüssige Fraktion aufzunehmen, um eine zweite trockene Fraktion und eine zweite flüssige Fraktion bereitzustellen,
- einen anaeroben Gärungsreaktor, der dazu konfiguriert ist, die erste trockene Fraktion und die zweite trockene Fraktion aufzunehmen und einen Gärrest und Biogas aus der kombinierten ersten trockenen Fraktion und der zweiten trockenen Fraktion bereitzustellen,
- eine zweite Zentrifuge, die dazu konfiguriert ist, den Gärrest aufzunehmen und eine dritte flüssige Fraktion und eine dritte trockene Fraktion bereitzustellen,
- eine Klärungseinheit, die dazu konfiguriert ist, die zweite flüssige Fraktion und die dritte flüssige Fraktion aufzunehmen und eine geklärte flüssige Fraktion bereitzustellen,
- eine oder mehrere Umkehrosmose-Filtrationseinheiten, die dazu konfiguriert sind, die geklärte flüssige Fraktion aufzunehmen, um ein UO-Retentat und ein UO-Permeat bereitzustellen.

13. Vorrichtung nach Anspruch 12, wobei die Klärungseinheit aus mindestens einer von der Ultrafiltrationseinheit und der Schwimmaufbereitungseinheit ausgewählt ist.

14. Vorrichtung nach Anspruch 12 oder 13, wobei zwei Umkehrosmose-Einheiten vorliegen.

15. Verwendung der Vorrichtung nach einem der Ansprüche 12 bis 14 in dem Verfahren zur Behandlung von Gülleschlamm nach einem der Ansprüche 1 bis 11.

## Revendications

1. Procédé pour traiter du lisier, comprenant les étapes de :
- fourniture de lisier,
- soumission du lisier à une séparation pour former une première fraction sèche et une première fraction liquide,
- addition d'un sel métallique à la première fraction liquide pour former une première fraction liquide contenant un sel métallique,
- soumission de la première fraction liquide contenant un sel métallique à une première centrifugation pour former une deuxième fraction sèche et une deuxième fraction liquide,
- acheminement de la première fraction sèche et de la deuxième fraction sèche vers un réacteur de digestion anaérobie pour former un digestat et un biogaz,
- soumission du digestat à une deuxième centrifugation pour former une troisième fraction liquide et une troisième fraction sèche,
- récupération de la troisième fraction sèche,
- soumission de la deuxième fraction liquide et de la troisième fraction liquide à une clarification qui est au moins l'une choisie parmi une ultrafiltration et une flottation pour former une fraction liquide clarifiée,
- soumission de la fraction liquide clarifiée à une ou plusieurs étapes successives de filtration par osmose inverse (RO) pour former un rétentat de RO et un perméat de RO,
- récupération du rétentat de RO.

2. Procédé selon la revendication 1, dans lequel la première fraction sèche forme environ 75 % et la deuxième fraction sèche environ 25 % de la charge pour la digestion.

3. Procédé selon la revendication 1 ou 2, dans lequel la teneur en matières sèches de la première fraction sèche et de la deuxième fraction sèche combinées est située dans la plage allant d'environ 15 % en poids à environ 35 % en poids, spécifiquement d'environ 28 % en poids.

4. Procédé selon l'une quelconque des revendications précédentes, dans lequel le sel métallique est ajouté en une quantité de 0,01 à 5,0 kg par kg de matières solides totales de la première fraction liquide, spécifiquement en une quantité d'environ 5,0 kg par tonne de la première fraction liquide.

5. Procédé selon l'une quelconque des revendications précédentes, dans lequel le sel métallique est un sel inorganique d'un métal trivalent tel que le fer, l'aluminium ou le chrome.

6. Procédé selon la revendication 5, dans lequel le sel métallique est le sulfate ferrique ou le chlorure ferrique ou un mélange de ceux-ci.

7. Procédé selon l'une quelconque des revendications précédentes, dans lequel un agent de floculation est ajouté à la première fraction liquide contenant un sel métallique.

8. Procédé selon l'une quelconque des revendications précédentes, dans lequel la teneur en matières sèches de la troisième fraction sèche est située dans la plage allant d'environ 25 % en poids à environ 35 % en poids.

9. Procédé selon l'une quelconque des revendications précédentes, dans lequel la teneur en matières sèches du rétentat de RO est située dans la plage allant d'environ 1 % en poids à environ 15 % en poids.

10. Procédé selon l'une quelconque des revendications précédentes, dans lequel le perméat de RO est soumis à une deuxième étape de filtration par RO pour former un deuxième perméat de RO.

11. Procédé selon la revendication 10, dans lequel la demande en oxygène chimique (COD) du deuxième perméat de RO est ≤ 15 mg O₂/l.

12. Dispositif pour traiter du lisier, comprenant des moyens pour mettre en œuvre le procédé de l'une quelconque des revendications 1 à 11, dans lequel les moyens comprennent
- une unité de séparateur pour séparer le lisier en une première fraction sèche et une première fraction liquide,
- une première centrifugeuse configurée pour recevoir une première fraction liquide contenant un sel métallique pour former une deuxième fraction sèche et une deuxième fraction liquide,
- un réacteur de digestion anaérobie configuré pour recevoir la première fraction sèche et la deuxième fraction sèche et pour former un digestat et un biogaz à partir de la première fraction sèche et de la deuxième fraction sèche combinées,
- une deuxième centrifugeuse configurée pour recevoir le digestat et pour former une troisième fraction liquide et une troisième fraction sèche,
- une unité de clarification configurée pour recevoir la deuxième fraction liquide et la troisième fraction liquide et pour former une fraction liquide clarifiée,
- une ou plusieurs unités d'osmose inverse configurées pour recevoir la fraction liquide clarifiée pour former un rétentat de RO et un perméat de RO.

13. Dispositif selon la revendication 12, dans lequel l'unité de clarification est au moins l'une choisie parmi une unité d'ultrafiltration et une unité de flottation.

14. Dispositif selon la revendication 12 ou 13, dans lequel deux unités d'osmose inverse sont présentes.

15. Utilisation du dispositif de l'une quelconque des revendications 12 à 14 dans le procédé pour traiter du lisier de l'une quelconque des revendications 1 à 11.
